Europäisches Patentamt

European Patent Office

Office européen des brevets

(11) Publication number: **0 409 615 B1**

# EUROPEAN PATENT SPECIFICATION

(45) Date of publication of patent specification: **17.05.95**

(51) Int. Cl.[6]: **C08L 23/04**, C08J 5/18

(21) Application number: **90307898.8**

(22) Date of filing: **19.07.90**

The file contains technical information submitted after the application was filed and not included in this specification

(54) **Tough monolayer shrink film for products containing moisture.**

(30) Priority: **20.07.89 US 383330**

(43) Date of publication of application:
**23.01.91 Bulletin 91/04**

(45) Publication of the grant of the patent:
**17.05.95 Bulletin 95/20**

(84) Designated Contracting States:
**AT BE CH DE DK ES FR GB GR IT LI LU NL SE**

(56) References cited:
**EP-A- 0 240 705**
**EP-A- 0 270 932**
**FR-A- 2 528 054**

(73) Proprietor: **E.I. DU PONT DE NEMOURS AND COMPANY**
**1007 Market Street**
**Wilmington**
**Delaware 19898 (US)**

(72) Inventor: **Roberts, Richard Kenneth**
**722 North 13th Street**
**Clinton,**
**Iowa 52732 (US)**

(74) Representative: **Jones, Alan John et al**
**CARPMAELS & RANSFORD**
**43 Bloomsbury Square**
**London, WC1A 2RA (GB)**

y

Rank Xerox (UK) Business Services
(3.10/3.09/3.3.3)

**Description**

BACKGROUND OF THE INVENTION

This invention relates to polyolefin based shrink films which are particularly suitable for packaging solid foods with high water content.

U.S. Patent 4,760,116 discloses a single layer heat shrinkable film consisting essentially of a blend of 99.5-98.5 weight % linear low or medium density polyethylene and 0.5-1.5 weight % of one or more copolymers of ethylene with a monomer selected from vinyl acetate and acrylic acids or esters, irradiated by a dosage of about 1 to 5 megarads. The films have a broad shrink temperature range and a low coefficient of friction when heated.

U.S. Patent 4,671,987 discloses stretch wrap composite films of at least two layers. One outside layer is a tackified ethylene vinyl acetate copolymer; another outside layer is very low density polyethylene. A third, inside, layer is linear low density polyethylene. The layer of very low density polyethylene can be a blend with up to about 50 weight % polyethylene homopolymer, ethylene-vinyl acetate copolymer, linear low density polyethylene, and mixtures of these compounds.

U.S. Patent 4,640,856 discloses a multilayer, thermoplastic shrink film having a substrate layer of very low density polyethylene and a gas barrier layer of vinylidene chloride copolymer or ethylene-vinyl alcohol, useful for packaging of meat. In certain applications, blends of VLDPE, LLDPE and/or EVA may be used to achieve desired properties.

FR-2528054 discloses compositions for making films comprising 2 to 25 wt% of free radical polyethylene of density 0.91 to 0.94 and 75 to 98 wt% of a copolymer of ethylene and a $C_4$ + alpha olefin of density 0.905 to 0.940, the average proportion of $\alpha$-olefin units being between 1 and 8 mole %.

European patent application 0 236 099, discloses a multilayer film useful in food packaging which may be oriented to provide a shrinkable film with good oxygen barrier properties. Outer layers comprise a polymeric material or blend of polymeric materials, such as a blend of LLDPE (preferably about 70-80%) and VLDPE (preferably about 20-30%) or a blend of LLDPE with LMDPE and EVA.

U.S. Patent 4,547,433 and U.S. Patent 4,495,249 disclose a heat shrinkable laminate film comprising a core layer of a gas barrier resin and an outer layer of a blend of an ethylene alpha olefin copolymer, density 0.900 - 0.950, with less than 80% of an ethylene vinyl acetate copolymer, crosslinked by ionizing irradiation.

U.S. Patent 4,537,376 discloses a heat shrinkable multilayer film for packaging meat. A core layer comprises a vinylidene chloride-vinyl chloride copolymer. One outer layer comprises an ethylene vinyl acetate copolymer. Another outer layer comprises a blend of ethylene vinyl acetate copolymer (20-80%), propylene ethylene copolymer (10-40%), and 1-butene ethylene copolymer (10-40%). The blend composition can be used as a single layer film or as a component layer or layers in a multiple-ply film structure.

Derwent Abstract 87-240136/34, citing Japanese application J62 164 744, published July 21, 1987, discloses a shrinkable film comprising (a) 30-70 parts ethylene alpha olefin copolymer having density of 0.86-0.94; (b) 30-70 parts ethylene vinyl acetate copolymer; (c) 3-15 parts ethylene ethyl acrylate copolymer; and (d) 0.5-10 parts polybutene.

EP-0240705A discloses a mixture of (A) 90 to 50% by weight of a linear ethylene-$\alpha$-olefin copolymer of density 0.90 to 0.93 and (B) 10 to 50% by weight of an ethylene polymer of density 0.87 to 0.91 which is less than that of (A) by at least 0.014.

For many applications, particularly for packaging of fish and poultry products on trays, a shrink film with certain improved mechanical and shrinkage properties is desirable. The present invention provides such a film. The film of the present invention is strong, having an average tensile strength of at least about 69 MPa (10 kpsi) and an average elongation at break of at least 150%. The film has an average modulus of at least about 138 MPa (20 kpsi), which is sufficiently stiff to be handled readily by existing packaging machines. The film exhibits an area shrinkage of at least about 30% at 90°C and at least about 75% at 110°C, thus allowing the preparation of snugly packaged items. It exhibits a recovery of deformation after five minutes of at least about 88% and after 60 minutes of at least about 92%, thus permitting packages made with such film to resume their original shape after deformation by some extraordinary force, applied, for example, during handling. Films of the present invention are heat sealable, forming good seals around cold, wet products. Finally, such films have a pleasant soft "feel" desirable for many packaging applications.

## SUMMARY OF THE INVENTION

The present invention provides a shrink film consisting essentially of a blend of:

(a) 10 to 80 percent by weight of at least one ethylene-alpha olefin linear copolymer having a density of 0.890 to 0.915;

(b) 15 to about 70 weight percent of at least one low-density polyethylene from a tubular reactor having a density of 0.920 to 0.925;

(c) 0 to 25 weight percent of at least one copolymer of ethylene with at least one copolymerized vinyl alkanoate, alkyl acrylate, or alkyl methacrylate; and

(d) 0 to 53 weight percent of at least one linear ethylene-alpha olefin copolymer having a density of 0.915 to 0.940.

The present invention further provides a process of preparing a shrink film comprising:

(a) melt blending the above composition;

(b) extruding the melt blend in the form of a sheet;

(c) cooling the molten polymer in the sheet to below its melting point;

(d) maintaining the sheet of polymer at a temperature below its melting point but sufficiently high that it can be oriented by stretching; and

(e) orienting the sheet of polymer in at least one direction.

## DETAILED DESCRIPTION OF THE INVENTION

The present invention is a shrink film made from a blend of at least two, and preferably three components. The first required component is one or more ethylene-alpha olefin linear copolymer having a density of about 0.890 to about 0.915 $g/cm^3$, preferably about 0.912 $g/cm^3$. Such copolymers are known as ultra low density polyethylene (ULDPE) or very low density polyethylene, and are prepared by the copolymerization of ethylene with an alpha olefin, preferably of 4 to about 18 carbon atoms, more preferably 6 to 18 carbon atoms, and most preferably 1-octene. The polymerization is generally carried out at low to medium pressure (about 29-30 MPa) in the presence of a coordination catalyst, such as various organoaluminum, organotitanium, or organovanadium compounds. Titanium modified organoaluminum compounds are widely used. An ultralow density material is obtained by incorporating sufficiently large amounts of the comonomer to achieve the desired low density. Such materials are available commercially from Dow Chemical Company and from Union Carbide Corporation. The copolymer preferably has a melt index of about 0.5 to about 2.0 dg/min, most preferably near 1.0, as is normally desirable for polymers to be used for films. Comparable results can also be obtained by using materials with higher melt index followed by irradiation crosslinking.

The ULDPE is present at 10 to 80 percent by weight of the blend, preferably about 40 to about 65 weight percent, and most preferably about 45 to about 60 weight percent. The ULDPE contributes many of the desirable properties to the film, i.e., shrinkage, recovery, and to some extent, tensile strength.

The second required component of this invention is another ethylene polymer. It is branched, i.e. tubular, low-density polyethylene having a density of about 0.920 to about 0.925.

The second component is a low-density polyethylene, preferably having a density of about 0.923. Specifically this component is usually a highly branched low density polyethylene prepared in a tubular reactor. A tubular reactor, like an autoclave, employs high pressures and produces resin in the density range of about 0.917 to about 0.928. In the tubular reactor, ethylene containing a free radical initiator is passed through a preheater where it is heated to 100-200 ° C. The mixture is passed through a tube where it heats to 250-300 ° C as polymerisation occurs, although some of the heat is removed by cooling. Pressure, temperature, and type of intitiator are all variables that affect the properties of the resin in a manner which is known to those skilled in the art. Tubular polymerization reactions are described, for example, in U.S. patents 2,870,130 and 2,839,515.

The distinctions between tubular resins and ordinary resin made e.g. in a high-pressure autoclave process are subtle but important. Such high pressure tubular resins have some desirable properties that are similar to those of LLDPE (linear low density polyethylene, ie. the optional fourth component) and similar to those of ethylene vinyl acetate copolymer. The tubular resins exhibit low modulus, high elongation, and relatively high impact strength compared to similar autoclave resins, and have a soft feel similar to that of EVA. Tubular resins mix well with LLDPE and with ULDPE, producing clear films. Autoclave resins of similar gross properties produce a much hazier film. Resins from the tubular process also operate more smoothly in the film forming and packaging process of the present invention. The reasons for these observed differences are not clearly known, but are believed to arise from a higher degree of branching in the resins from the tubular process. The melt index of the branched LDPE is preferably about 1 to about 3 and most preferably about 1.9.

The low density polyethylene comprising the second component is preferably present at about 25 to about 55 weight percent, and most preferably about 30 to about 45 weight percent. This ethylene polymer provides stiffness necessary for running the film on certain high speed packaging machines. When branched LDPE is used, that component also contributes to recovery and shrinkage.

The third optional componet is at least one copolymer of ethylene with at least one copolymerized vinyl alkanoate, alkyl acrylate, or alkyl methacrylate. This polymer is preferably present in an amount of about 2 to about 22 percent, and most preferably about 5 to about 15 percent.

Suitable comonomers include vinyl alkanoates such as vinyl acetate, propionate, or butyrate, and alkyl acrylates and methacrylates wherein the alkyl group is methyl, ethyl, propyl, isopropyl, n-butyl, iso-butyl, pentyl, hexyl, 2-ethylhexyl, and the like. Minor amounts of a third comonomer such as CO or $SO_2$ can also be present. Preferably the comonomer is vinyl acetate; the preferred melt index of this component is about 0.1 to about 10. The comonomer comprises about 3 to about 20 weight percent of the Copolymer, preferably about 10 to about 15 weight percent.

The optional fourth component is linear ethylene-$\alpha$ copolymer of the second component and is commonly referred to as linear low density polyethylene (LLDPE). It preferably has a density of about 0.920 to about 0.924 and is prepared by copolymerization of ethylene with an $\alpha$ olefin of preferably 4 to about 18 carbon atoms, more preferably 6-18 carbon atoms, and most preferably 1-octene. The polymerization is carried out in a well-known manner similar to that described for ultra low density polyethylene, except that the amount of comonomer is reduced to an appropriate extent. Such polymerization is described, for example in U.S. Patent 4,076,698. The copolymer, as above, preferably has a melt index of about 0.5 to about 2.0 dg/min, most preferably near 1.0.

The addition of ethylene vinyl acetate (EVA) to the composition is believed to contribute to the recovery and shrinkage properties of the film. It also provides a feel of softness to the film which is desirable, and contributes to the heat sealability.

Of course, mixed comonomers can be used in each of the copolymers of the present invention. For example, a ULDPE which includes both octene and hexene as comonomers could be suitable. Similarly, a terpolymer of ethylene with vinyl acetate and e.g. methyl acrylate could be suitable as the third polymeric component. Likewise each of the major components can itself be a blend of suitable polymers selected from the available polymers for that component.

If desired, the film of the present invention can be crosslinked by e.g. irradiation to improve its properties, particularly to extend the upper operating temperature of the shrink tunnel. Therefore a preferred embodiment provides irradiation of the film with about 1 to about 5 megarads, and most preferably about 2 megarads, of ionizing radiation. In order for such crosslinking to be effective, the blend should contain some branched material such as EVA or branched LDPE.

Films of the present invention are preferably used as monolayer films; however, they can equally well serve as one or more layers of a multiple layer film structure. In order to retain the excellent sealing properties, it is preferred that for such a multiple layer structure at least one surface layer is a composition of the present invention.

In addition, other conventional additives can be employed in low amounts in films of this invention, such as fillers, slip agents, antiblock agents, antifog agents, and the like.

Films of the present invention can be manufactured by conventional processes for preparing oriented film. Typically a sheet of film is extruded, most often in the form of a tube, which is then quenched. The sheet or tube is oriented by heating to a temperature below its melting point and stretching in at least one direction. Most commonly such orientation is accomplished by a combination of air pressure and mechanical stretching in the machine direction, in the conventional air bubble process. Further details of film manufacture are provided in the Examples which follow. The shrink film so prepared can be used in conventional packaging operations, which can include wrapping of meat, fish, or poultry items, optionally contained within a tray, heat sealing the film to itself to form a closed, air tight package by means of hot wires, hot bars, or crimping wheels, and heating the film briefly in a shrink tunnel to cause it to shrink securely around the contents. The resulting packages retain their seals even when the contents are wet, and maintain their shape well even when subjected to distortion during shipping and handling.

Examples 1-9 and Comparative Examples C1-C4

Films were prepared in a semiworks unit ("SW") or in a commercial unit ("Coml"), as described below. Resin feed for each sample made by the semiworks unit was prepared by dry blending each of the three

4

resin components together. Resin for samples prepared by the commercial unit was prepared by melt blending LLDPE, EVA, and any additives used, and thereafter dry blending this mixture with ULDPE.

The ultra low density polyethylene (ULDPE) was Attane™ 4001, from Dow Chemical, having a density of 0.912 g/cm$^3$ and a melt index of 1.0 dg/min. The EVA copolymer contained 12 percent by weight vinyl acetate moieties and had a density of 0.940 and a melt index of 0.35. The linear low density polyethylene (LLDPE) was Dowlex™ 2050A, from Dow Chemical, having a density of 0.921 and a melt index of 1.1.

Samples were prepared by first extruding a single-layer tube through a typical circular die, using the parameters indicated in Table I for a semiworks unit or a commercial unit.

Table I

|  | Semiworks | Commercial |
|---|---|---|
| Extruder diameter, mm | 50.8 | 203 |
| Extruded tube diameter, mm | 53 | 361 |
| Tube speed, m/min | 1.8 | 17.7 |
| Bubble pressure, kPa | 1.9-2.5 | 0.35 |
| Film speed, m/min | 7.3 | 71.3 |
| Bubble diameter, m | 0.318 | 1.80 |

The extruded tube was passed over an internal quenching mandrel maintained at 20°C. The tubing was reheated to a temperature below the melting point of the polymer (about 110-115°C). Simultaneously with the heating, the tube was stretched in the transverse direction (TD) by blowing air into the tubing, and in the machine direction (MD) by pulling the film with rollers running three to five times the tube speed. The air was introduced into the tube at a pressure sufficient to expand the tube to about five times its original diameter, producing a hoop stress in the expanded bubble of about 14 - 17 MPa (2000-2500 kpsi).

Tensile strength, modulus, and elongation of the resulting films were measured by ASTM D882. Shrinkage was measured by ASTM D2732, and area shrinkage calculated from the expression 1-(1-MD shrink) x (1-TD shrink)) x 100%. Recovery from deformation was determined by placing a 25.4 mm (1 inch) wide sample of film in an Instron™, having its jaws set initially to a 254 mm (10 inch) gap. The sample was stretched to 292 mm (11.5 inches) at a rate of 25.4 mm per minute. Tension on the sample was maintained for 5 minutes and thereafter released. The length of the sample after 5 minutes and 60 minutes recovery time was measured, and the percent recovery was calculated. The results of these measurements, reported in Table II, show that for each of the Comparative Examples 1 to 9, all of the pertinent properties of the film were within or nearly within the desired region. Comparative Example C1, which uses an insufficient amount of EVA and is at the lower limit of ULDPE, exhibits insufficient shrinkage at both 90 and 110° and borderline low recovery of deformation at 5 minutes. Comparative Example C2, which lacks LLDPE, exhibits unacceptably low modulus. Comparative Examples C3 and C4, which lack ULDPE, exhibit low shrinkage and low or borderline recovery. Comparative Example 2 exhibits borderline shrinkage; it is at the lower limit of the present invention in terms of ULDPE content. Comparative Example 3 likewise exhibits borderline shrinkage and recovery; it is near the lower limit of the invention in terms of EVA content. Comparative Example 4 exhibits borderline recovery properties; it is near the upper limit of the invention in terms of EVA content.

TABLE II

| Ex. | Unit | % ULDPE | % EVA | % LLDPE | Tens. Str MPa | | Modulus MPa | | Elongation, % | | Recovery, % | | | | Shrinkage, % | | | | | |
|---|---|---|---|---|---|---|---|---|---|---|---|---|---|---|---|---|---|---|---|---|
| | | | | | | | | | | | 5 min | | 60 min | | 90° | | | 110° | | |
| | | | | | MD | TD | MD | TD | MD | TD | MD | TD | MD | TD | MD | TD | Area | MD | TD | Area |
| C1 | SW | 10 | 5 | 85 | 84 | 104 | 242 | 254 | 189 | 155 | 85 | 90 | 92 | 93 | 6 | 15 | 20 | 32 | 46 | 63 |
| 1 | SW | 80 | 5 | 15 | 81 | 88 | 155 | 172 | 257 | 123 | 93 | 90 | 98 | 93 | 13 | 24 | 34 | 54 | 61 | 82 |
| 2 | SW | 10 | 20 | 70 | 67 | 92 | 224 | 222 | 247 | 165 | 91 | 91 | 93 | 94 | 10 | 20 | 28 | 43 | 55 | 74 |
| C2 | SW | 80 | 20 | 0 | 85 | 104 | 130 | 139 | 227 | 151 | 89 | 91 | 91 | 94 | 15 | 26 | 37 | 57 | 64 | 85 |
| C3 | SW | 0 | 12.5 | 87.5 | 63 | 74 | 171 | 172 | 254 | 118 | 85 | 89 | 89 | 92 | 7 | 21 | 27 | 42 | 50 | 71 |
| 3 | SW | 45 | 2 | 53 | 82 | 94 | 205 | 212 | 268 | 131 | 86 | 88 | 90 | 92 | 12 | 18 | 28 | 47 | 54 | 76 |
| 4 | SW | 45 | 21 | 34 | 71 | 85 | 175 | 192 | 261 | 130 | 86 | 88 | 90 | 92 | 12 | 25 | 34 | 51 | 61 | 81 |
| 5 | SW | 45 | 12.5 | 42.5 | 78 | 95 | 162 | 185 | 250 | 147 | 88 | 89 | 90 | 93 | 15 | 27 | 38 | 56 | 63 | 84 |
| 6 | SW | 55 | 8 | 37 | 70 | 77 | 148 | 161 | 262 | 126 | 85 | 90 | 89 | 96 | 12 | 20 | 30 | 47 | 55 | 76 |
| 7 | Coml | 55 | 8 | 37 | 80 | 84 | 179 | 193 | 154 | 154 | 88 | 90 | 90 | 95 | 16 | 19 | 32 | 53 | 58 | 80 |
| 8 | Coml | 55 | 8 | 37 | 77 | 87 | 172 | 186 | 147 | 152 | 85 | 91 | 91 | 95 | 14 | 20 | 31 | 53 | 59 | 81 |
| 9 | SW | 60 | 7 | 33 | 77 | 77 | 200 | 193 | 231 | 124 | -- | -- | -- | -- | -- | -- | -- | 49 | 57 | 78 |
| C4 | Coml | 0 | 1 | 99 | 83 | 98 | 303 | 338 | 164 | 144 | 83 | 88 | 87 | 87 | 6 | 13 | 18 | 30 | 42 | 59 |

-- indicates the measurement was not made

Examples 10-14

Samples were prepared and tested as indicated for Examples 1-9. The low density polyethylene used in these Examples was Dow LDPE 503, from Dow Chemical, a highly branched polymer believed to be-made in a tubular reactor, having a density of 0.923 and a melt index of 1.9. The results, reported in Table III, show that this highly branched LDPE can be substituted for all or part of the LLDPE and EVA. Example 10 is a Comparative Example

TABLE III

| Ex. | Unit | % ULDPE | % EVA | % LLDPE | % LDPE | Tens Str MPa MD | TD | Modulus MPa MD | TD | Elonga- tion, % MD | TD | Recovery, % 5 min MD | TD | 60 min MD | TD | Shrinkage, % 90° MD | TD | Area | 110° MD | TD | Area |
|---|---|---|---|---|---|---|---|---|---|---|---|---|---|---|---|---|---|---|---|---|---|
| 10 | SW | 55 | 8 | 37 | 0 | 91 | 99 | 154 | 160 | 224 | 140 | 91 | 91 | 94 | 95 | 12 | 22 | 31 | 54 | 64 | 83 |
| 11 | SW | 55 | 8 | 17 | 20 | 74 | 110 | 156 | 148 | 198 | 142 | 92 | 91 | 95 | 95 | 15 | 25 | 36 | 55 | 65 | 84 |
| 12 | SW | 55 | 8 | 0 | 37 | 78 | 91 | 145 | 152 | 184 | 135 | 92 | 91 | 95 | 94 | 14 | 30 | 40 | 61 | 67 | 87 |
| 13 | SW | 63 | 0 | 17 | 20 | 78 | 107 | 156 | 152 | 207 | 138 | 90 | 90 | 94 | 94 | 12 | 24 | 33 | 56 | 66 | 86 |
| 14 | SW | 63 | 0 | 0 | 37 | 73 | 89 | 156 | 151 | 180 | 132 | 90 | 90 | 94 | 93 | 16 | 28 | 40 | 60 | 70 | 88 |

Comparative Example C5.

Packages were made on an FMC™ horizontal form and fill machine. A tube was formed from the film of Comparative Example C4 using heated wheels to form a seal between two edges along the length of the tube. Trays of chicken were pushed into the tube from the open end. The tube and tray were advanced and a hot knife bar cut the tube and sealed the trailing end. Packages so prepared exhibited gaps in the sealed area formed by the heated wheels in about every third package.

Examples 15 and 16

Packages were made on a commercial scale from the film of Examples 7 and 8, respectively, using the process of Comparative Example C5. Observation of several thousand packages so prepared revealed no apparent defects or leaks in the seal areas.

Examples 17-21

Tubes (but not packages) were prepared from the films of Examples 10-14. Tubes from the films of Examples 10, 11, and 12 exhibited good seals. Tubes from the films of Examples 13 and 14 exhibited about 1 seal defect every 6 meters (20 feet). Since a package typically requires about 30 cm (1 foot) of tube, this corresponds to about a 5% defect rate.

**Claims**
**Claims for the following Contracting States : AT, BE, CH, DE, DK, FR, GB, GR, IT, LI, LU, NL, SE**

1. A shrink film consisting essentially of a blend of:
   (a) 10 to 80 percent by weight of at least one ethylene-alpha olefin linear copolymer having a density of 0.890 to 0.915;
   (b) 15 to about 70 weight percent of at least one low-density polyethylene from a tubular reactor, having a density of 0.920 to 0.925;
   (c) 0 to 25 weight percent of at least one copolymer of ethylene with at least one copolymerized vinyl alkanoate, alkyl acrylate, or alkyl methacrylate; and
   (d) 0 to 53 weight percent of at least one linear ethylene-alpha olefin copolymer having density of 0.915 to 0.940.

2. The shrink film of claim 1 wherein the film is a single layer.

3. The shrink film of claim 1 or 2 wherein the alpha olefin of copolymer (a) has 6 to 18 carbon atoms.

4. The shrink film of claim 1 or 2 wherein the alpha olefin of copolymer (a) is 1-octene.

5. The shrink film of claims 1, 2, 3 or 4 wherein copolymer (a) comprises about 40 to about 65 weight percent of the composition.

6. The shrink film of claim 5 wherein copolymer (a) comprises about 45 to about 60 weight percent of the composition.

7. The shrink film of any one of claims 1 to 6 wherein polymer (d) is a copolymer of ethylene with an alpha olefin having 4 to 18 carbon atoms.

8. The shrink film of claim 7 wherein polymer (d) is a copolymer of ethylene with 1-octene.

9. The shrink film of any one of claims 1 to 8 wherein polymer (b) comprises about 25 to about 55 weight percent of the composition.

10. The shrink film of claim 9 wherein polymer (b) comprises about 30 to about 45 weight percent of the composition.

**11.** The shrink film of any one of claims 1 to 10 wherein copolymer (c) is a copolymer of ethylene and vinyl acetate.

**12.** The shrink film of claim 11 wherein the ethylene vinyl acetate copolymer of (c) contains about 3 to about 20 weight percent copolymerised vinyl acetate moieties.

**13.** The shrink film of claim 11 wherein the ethylene vinyl acetate copolymer of (c) contains about 10 to about 15 weight percent copolymerized vinyl acetate moieties.

**14.** The shrink film of any one of claims 1 to 13 wherein copolymer (c) comprises about 2 to about 22 weight percent of the composition.

**15.** The shrink film of claim 14 wherein copolymer (c) comprises about 5 to about 15 weight percent of the composition.

**16.** The shrink film of any one of claims 1 to 15 wherein the film is cross-linked to the degree induced by an irradiation dosage of about 1 to about 5 megarads of ionizing radiation.

**17.** The shrink film of claims 1, 2 or 16 wherein the copolymer of (a) is a copolymer of ethylene with 1-octene, has a melt index of 0.5 to 2.0 and a density of 0.910 to 0.915, and is present at a level of 45 to 60 weight percent, the polymer of (b) is present at a level of 30 to 45 weight percent, and the copolymer of (c) is a copolymer of ethylene with 10 to 15 weight percent vinyl acetate and is present at a level of 5 to 15 weight percent.

**18.** A process for preparing a shrink film comprising:
   (a) melt blending a composition of
      (i) 10 to 80 percent by weight of at least one ethylene-alpha olefin linear copolymer having a density of 0.890 to 0.915;
      (ii) 15 to about 70 weight percent of at least one low density polyethylene from a tubular reactor having a density of 0.920 to 0.925;
      (iii) 0 to 25 weight percent of at least one copolymer of ethylene and at least one vinyl alkanoate, alkyl acrylate, or alkyl methacrylate; and
      (iv) 0 to 53 weight percent of at least one linear ethylene-alpha olefin copolymer having density of 0.915 to 0.940;
   (b) extruding the melt blend in the form of a sheet;
   (c) cooling the molten polymer in the sheet to below its melting point;
   (d) maintaining the sheet of polymer at a temperature below its melting point but sufficiently high that it can be oriented by stretching; and
   (e) orienting the sheet of polymer in at least one direction.

**19.** A multiple layer structure wherein at least one layer is the shrink film of any one of the preceding claims.

**Claims for the following Contracting State : ES**

**1.** A process for preparing a shrink film comprising:
   (a) melt blending a composition of;
      (i) 10 to 80 percent by weight of at least one ethylene-α olefin linear copolymer having a density of 0.890 to 0.915;
      (ii) 15 to about 70 weight percent of at least one low-density polyethylene from a tubular reactor having a density of 0.920 to 0.925;
      (iii) 0 to 25 weight percent of at least one copolymer of ethylene and at least one vinyl alkanoate, alkyl acrylate, or alkyl methacrylate; and
      (iv) 0 to 53 weight percent of at least one linear ethylene-α olefin copolymer having density of 0.915 to 0.940
   (b) extruding the melt blend in the form of a sheet;
   (c) cooling the molten polymer in the sheet to below its melting point;

(d) maintaining the sheet of polymer at a temperature below its melting point but sufficiently high that it can be oriented by stretching; and

(e) orienting the sheet of polymer in at least one direction.

2. The process of claim 1 wherein the film is a single layer.

3. The process of claim 1 or 2 wherein the α olefin of copolymer (i) has 6 to 18 carbon atoms.

4. The process of claim 1 or 2 wherein the α olefin of copolymer (i) is 1-octene.

5. The process of claim 1, 2, 3 or 4 wherein the α olefin of copolymer (i) comprises about 40 to about 65 weight percent of the composition.

6. The process of claim 5 wherein copolymer (i) comprises about 45 to about 60 weight percent of the composition.

7. The process of any one of claims 1 to 6 wherein polymer (iv) is a copolymer of ethylene with an alpha olefin having 4 to 18 carbon atoms.

8. The process of claim 7 wherein polymer (iv) is a copolymer of ethylene with 1-octene.

9. The process of any one of claims 1 to 8 wherein polymer (ii) comprises about 25 to about 55 weight percent of the composition.

10. The process of claim 9 wherein polymer (ii) comprises about 30 to about 45 weight percent of the composition.

11. The process of any one of claims 1 to 10 wherein copolymer (iii) is a copolymer of ethylene and vinyl acetate.

12. The process of claim 11 wherein the ethylene vinyl acetate copolymer of (iii) contains about 3 to about 20 weight percent copolymerized vinyl acetate moieties.

13. The process of claim 11 wherein the ethylene vinyl acetate copolymer of (iii) contains about 10 to about 15 weight percent copolymerized vinyl acetate moieties.

14. The process of any one of claims 1 to 13 wherein copolymer (iii) comprises about 2 to about 22 weight percent of the composition.

15. The process of claim 14 wherein copolymer (iii) comprises about 5 to about 15 weight percent of the composition.

16. The process of any one of claims 1 to 15 wherein the film is cross-linked to the degree induced by an irradiation dosage of about 1 to about 5 megarads of ionizing radiation.

17. The process of claims 1, 2 or 16 wherein the copolymer of (i) is a copolymer of ethylene with 1-octene, has a melt index of 0.5 to 2.0 and a density of 0.910 to 0.915, and is present at a level of 45 to 60 weight percent, the polymer of (ii) is present at a level of 30 to 45 weight percent, and the copolymer of (iii) is a copolymer of ethylene with 10 to 15 weight percent vinyl acetate and is present at a level of 5 to 15 weight percent.

**Patentansprüche**
**Pantentansprüche für flogende Vertragsstaaten : AT, BE, CH, DE, DK, FR, GB, GR, IT, LI, LU, NL, SE**

1. Schrumpffolie, bestehend im wesentlichen aus einer Mischung von:
    (a) 10 bis 80 Gew.-% von wenigstens einem linearen Ethylen-alpha-Olefin-Copolymer mit einer Dichte von 0,890 bis 0,915;

(b) 15 bis etwa 70 Gew.-% von wenigstens einem Polyethylen mit niedriger Dichte aus einem Röhrenreaktor mit einer Dichte von 0,920 bis 0,925;

(c) 0 bis 25 Gew.-% von wenigstens einem Copolymer von Ethylen mit wenigstens einem copolymerisierten Vinylalkanoat, Alkylacrylat oder Alkylmethacrylat; und

(d) 0 bis 53 Gew.-% von wenigstens einem linearen Ethylen-alpha-Olefin-Copolymer mit einer Dichte von 0,915 bis 0,940.

2. Schrumpffolie nach Anspruch 1, worin die Folie eine einzige Schicht ist.

3. Schrumpffolie nach Anspruch 1 oder 2, worin das alpha-Olefin von Copolymer (a) 6 bis 18 Kohlenstoffatome besitzt.

4. Schrumpffolie nach Anspruch 1 oder 2, worin das alpha-Olefin von Copolymer (a) 1-Octen ist.

5. Schrumpffolie nach den Ansprüche 1, 2, 3 oder 4, worin das Copolymer (a) etwa 40 bis etwa 65 Gew.-% der Zusammensetzung umfaßt.

6. Schrumpffolie nach Anspruch 5, worin Copolymer (a) etwa 45 bis etwa 60 Gew.-% der Zusammensetzung umfaßt.

7. Schrumpffolie nach einem der Ansprüche 1 bis 6, worin Polymer (d) ein Copolymer von Ethylen mit einem alpha-Olefin darstellt, das 4 bis 18 Kohlenstoffatome besitzt.

8. Schrumpffolie nach Anspruch 7, worin Polymer (d) ein Copolymer von Ethylen mit 1-Octen ist.

9. Schrumpffolie nach einem der Ansprüche 1 bis 8, worin Polymer (b) etwa 25 bis etwa 55 Gew.-% der Zusammensetzung umfaßt.

10. Schrumpffolie nach Anspruch 9, worin Polymer (b) etwa 30 bis etwa 45 Gew.-% der Zusammensetzung umfaßt.

11. Schrumpffolie nach einem der Ansprüche 1 bis 10, worin Copolymer (c) ein Copolymer von Ethylen und Vinylacetat ist.

12. Schrumpffolie nach Anspruch 11, worin das Ethylen-Vinylacetat-Copolymer von (c) etwa 3 bis etwa 20 Gew.-% copolymerisierte Vinylacetat-Gruppierungen enthält.

13. Schrumpffolie nach Anspruch 11, worin das Ethylen-Vinylacetat-Copolymer von (c) etwa 10 bis etwa 15 Gew.-% copolymerisierte Vinylacetat-Gruppierungen enthält.

14. Schrumpffolie nach einem der Ansprüche 1 bis 13, worin Copolymer (c) etwa 2 bis etwa 22 Gew.-% der Zusammensetzung umfaßt.

15. Schrumpffolie nach Anspruch 14, worin Copolymer (c) etwa 5 bis etwa 15 Gew.-% der Zusammensetzung umfaßt.

16. Schrumpffolie nach einem der Ansprüche 1 bis 15, worin die Folie zu einem Ausmaß vernetzt ist, das durch eine Bestrahlungsdosis von etwa 1 bis etwa 5 megarad einer ionisierenden Strahlung zustandekommt.

17. Schrumpffolie nach den Ansprüchen 1, 2 oder 16, worin das Copolymer von (a) ein Copolymer von Ethylen mit 1-Octen ist, einen Schmelzindex von 0,5 bis 2,0 und eine Dichte von 0,910 bis 0,915 besitzt und in einer Konzentration von 45 bis 60 Gew.-% vorhanden ist, das Polymer aus (b) in einer Konzentration von 30 bis 45 Gew.-% vorhanden ist, und das Copolymer von (c) ein Copolymer von Ethylen mit 10 bis 15 Gew.-% Vinylacetat ist und in einer Konzentration von 5 bis 15 Gew.-% vorhanden ist.

18. Verfahren zur Herstellung einer Schrumpffolie, umfassend:

(a) Schmelzvermischen einer Zusammensetzung von

(i) 10 bis 80 Gew.-% von wenigstens einem linearen Ethylen-alpha-Olefin-Copolymer einer Dichte von 0,890 bis 0,915;

(ii) 15 bis etwa 70 Gew.-% von wenigstens einem Polyethylen mit niedriger Dichte aus einem Röhrenreaktor mit einer Dichte von 0,920 bis 0,925;

(iii) 0 bis 25 Gew.-% von wenigstens einem Copolymer von Ethylen und wenigstens einem Vinylalkanoat, Alkylacrylat oder Alkylmethacrylat; und

(iv) 0 bis 53 Gew.-% von wenigstens einem linearen Ethylen-alpha-Olefin-Copolymer mit einer Dichte von 0,915 bis 0,940;

(b) Extrudieren der Schmelzmischung in die Form einer Folie;

(c) Abkühlen des geschmolzenen Copolymeren in der Folie unter seinen Schmelzpunkt;

(d) Halten der Folie aus dem Polymer bei einer Temperatur unter ihrem Schmelzpunkt, jedoch hoch genug, daß sie durch Strecken orientiert werden kann; und

(e) Orientieren der Folie aus dem Polymer in wenigstens einer Richtung.

19. Mehrschichtenstruktur, worin wenigstens eine Schicht die Schrumpffolie nach einem der vorgenannten Ansprüche darstellt.

**Patentansprüche für folgenden Vertragsstaat : ES**

1. Verfahren zur Herstellung einer Schrumpffolie, umfassend:

(a) Schmelzvermischen einer Zusammensetzung von

(i) 10 bis 80 Gew.-% von wenigstens einem linearen Ethylen-alpha-Olefin-Copolymer mit einer Dichte von 0,890 bis 0,915;

(ii) 15 bis 70 Gew.-% von wenigstens einem Polyethylen mit niedriger Dichte aus einem Röhrenreaktor mit einer Dichte von 0,920 bis 0,925;

(iii) 0 bis 25 Gew.-% von wenigstens einem Copolymer von Ethylen und wenigstens einem Vinylalkanoat, Alkylacrylat oder Alkylmethacrylat; und

(iv) 0 bis 53 Gew.-% von wenigstens einem linearen Ethylen-alpha-Olefin-Copolymer mit einer Dichte von 0,915 bis 0,940;

(b) Extrudieren der Schmelzmischung in die Form einer Folie;

(c) Abkühlen des geschmolzenen Polymeren in der Folie unter seinen Schmelzpunkt;

(d) Halten der Folie aus dem Polymer bei einer Temperatur unter ihrem Schmelzpunkt, jedoch hoch genug, daß sie durch Strecken orientiert werden kann; und

(e) Orientieren der Folie aus dem Polymer in wenigstens einer Richtung.

2. Verfahren nach Anspruch 1, bei dem die Folie eine einzige Schicht ist.

3. Verfahren nach Anspruch 1 oder 2, bei dem das alpha-Olefin von Copolymer (i) 6 bis 18 Kohlenstoffatome besitzt.

4. Verfahren nach Anspruch 1 oder 2, bei dem das alpha-Olefin von Copolymer (i) 1-Octen ist.

5. Verfahren nach Anspruch 1, 2, 3 oder 4, bei dem das alpha-Olefin von Copolymer (i) etwa 40 bis etwa 65 Gew.-% der Zusammensetzung umfaßt.

6. Verfahren nach Anspruch 5, bei dem Copolymer (i) etwa 45 bis etwa 60 Gew.-% der Zusammensetzung umfaßt.

7. Verfahren nach einem der Ansprüche 1 bis 6, bei dem Polymer (iv) ein Copolymer von Ethylen mit einem alpha-Olefin darstellt, das 4 bis 18 Kohlenstoffatome aufweist.

8. Verfahren nach Anspruch 7, bei dem Polymer (iv) ein Copolymer von Ethylen mit 1-Octen ist.

9. Verfahren nach einem der Ansprüche 1 bis 8, bei dem Polymer (ii) etwa 25 bis etwa 55 Gew.-% der Zusammensetzung umfaßt.

EP 0 409 615 B1

**10.** Verfahren nach Anspruch 9, bei dem Polymer (ii) etwa 30 bis etwa 45 Gew.-% der Zusammensetzung umfaßt.

**11.** Verfahren nach einem der Ansprüche 1 bis 10, bei dem Copolymer (iii) ein Copolymer von Ethylen und Vinylacetat ist.

**12.** Verfahren nach Anspruch 11, bei dem das Ethylen-Vinylacetat-Copolymer von (iii) etwa 3 bis etwa 20 Gew.-% copolymerisierte Vinylacetat-Gruppierungen enthält.

**13.** Verfahren nach Anspruch 11, bei dem das Ethylen-Vinylacetat-Copolymer von (iii) etwa 10 bis 15 Gew.-% copolymerisierte Vinylacetat-Gruppierungen enthält.

**14.** Verfahren nach einem der Ansprüche 1 bis 13, bei dem Copolymer (iii) etwa 2 bis etwa 22 Gew.-% der Zusammensetzung umfaßt.

**15.** Verfahren nach Anspruch 14, bei dem Copolymer (iii) etwa 5 bis etwa 15 Gew.-% der Zusammensetzung umfaßt.

**16.** Verfahren nach einem der Ansprüche 1 bis 15, bei dem die Folie zu einem Ausmaß vernetzt ist, das durch eine Bestrahlungsdosis von etwa 1 bis etwa 5 megarad einer ionisierenden Strahlung zustandekommt.

**17.** Verfahren nach den Ansprüchen 1, 2 oder 16, bei dem das Copolymer von (i) ein Copolymer von Ethylen mit 1-Octen ist, einen Schmelzindex von 0,5 bis 2,0 und eine Dichte von 0,910 bis 0,915 besitzt und in einer Konzentration von 45 bis 60 Gew.-% vorhanden ist, das Polymer von (ii) in einer Konzentration von 30 bis 45 Gew.-% vorhanden ist, und das Copolymer von (iii) ein Copolymer von Ethylen mit 10 bis 15 Gew.-% Vinylacetat ist und in einer Konzentration von 5 bis 15 Gew.-% vorhanden ist.

**Revendications**
**Revendications pour les Etats contractants suivants : AT, BE, CH, DE, DK, FR, GB, GR, IT, LI, LU, NL, SE**

**1.** Une pellicule rétractable essentiellement constituée d'un mélange :
(a) de 10 à 80 pour cent en poids d'au moins un copolymère linéaire d'éthylène/oléfine alpha ayant une densité de 0,890 à 0,915 ;
(b) de 15 à environ 70 pour cent en poids d'un moins un polyéthylène basse densité provenant d'un réacteur tubulaire, ayant une densité de 0,920 à 0,925 ;
(c) de 0 à 25 pour cent en poids d'au moins un copolymère d'éthylène avec au moins un alcanoate de vinyle, un acrylate d'alkyle ou un méthacrylate d'alkyle copolymérisé(s) ; et
(d) de 0 à 53 pour cent en poids d'au moins un copolymère linéaire d'éthylène/oléfine alpha ayant une densité de 0,915 à 0,940.

**2.** La pellicule rétractable de la revendication 1 dans laquelle la pellicule est monocouche.

**3.** La pellicule rétractable de la revendication 1 ou 2 dans laquelle l'oléfine alpha du copolymère (a) compte 6 à 18 atomes de carbone.

**4.** La pellicule rétractable de la revendication 1 ou 2 dans laquelle l'oléfine alpha du copolymère (a) est le 1-octène.

**5.** La pellicule rétractable des revendications 1, 2, 3 ou 4 dans laquelle le copolymère (a) constitue d'environ 40 à environ 65 pour cent du poids de la composition.

**6.** La pellicule rétractable de la revendication 5 dans laquelle le copolymère (a) constitue d'environ 45 à environ 60 pour cent du poids de la composition.

13

7. La pellicule rétractable de l'une quelconque des revendications 1 à 6 dans laquelle le polymère (d) est un copolymère d'éthylène avec une oléfine alpha comptant 4 à 18 atomes de carbone.

8. La pellicule rétractable de la revendication 7 dans laquelle le polymère (d) est un copolymère d'éthylène et de 1-octène.

9. La pellicule rétractable de l'une quelconque des revendications 1 à 8 dans laquelle le polymère (b) constitue d'environ 25 à environ 55 pour cent du poids de la composition.

10. La pellicule rétractable de la revendication 9 dans laquelle le polymère (b) constitue d'environ 30 à environ 45 pour cent du poids de la composition.

11. La pellicule rétractable de l'une quelconque des revendications 1 à 10 dans laquelle le copolymère (c) est un copolymère d'éthylène et d'acétate de vinyle.

12. La pellicule rétractable de la revendication 11 dans laquelle le copolymère d'éthylène et d'acétate de vinyle de (c) renferme d'environ 3 à environ 20 pour cent en poids de portions d'acétate de vinyle copolymérisées.

13. La pellicule rétractable de la revendication 11 dans laquelle le copolymère d'éthylène et d'acétate de vinyle de (c) renferme d'environ 10 à environ 15 pour cent en poids de portions d'acétate de vinyle copolymérisées.

14. La pellicule rétractable de l'une quelconque des revendications 1 à 13 dans laquelle le copolymère (c) constitue d'environ 2 à environ 22 pour cent du poids de la composition.

15. La pellicule rétractable de la revendication 14 dans laquelle le copolymère (c) constitue d'environ 5 à environ 15 pour cent du poids de la composition.

16. La pellicule rétractable de l'une quelconque des revendications 1 à 15 dans laquelle la pellicule est réticulée au degré obtenu par un dosage d'irradiation d'environ 1 à environ 5 mégarads de rayonnement ionisant.

17. La pellicule rétractable des revendications 1, 2 ou 16 dans laquelle le copolymère de (a) est un copolymère d'éthylène et de 1-octène, présente un indice de fluidité de 0,5 à 2,0 et une densité de 0,910 à 0,915 et est présent en une proportion de 45 à 60 pour cent en poids, le polymère de (b) est présent en une proportion de 30 à 45 pour cent en poids, et le copolymère de (c) est un copolymère d'éthylène avec 10 à 15 pour cent en poids d'acétate de vinyle et est présent en une proportion de 5 à 15 pour cent en poids.

18. Un procédé pour la préparation d'une pellicule rétractable comprenant les opérations consistant :
    (a) à mélanger à l'état fondu une composition de
        (i) 10 à 80 pour cent en poids d'au moins un copolymère linéaire d'éthylène/oléfine alpha ayant une densité de 0,890 à 0,915 ;
        (ii) 15 à environ 70 pour cent en poids d'un moins un polyéthylène basse densité provenant d'un réacteur tubulaire et ayant une densité de 0,920 à 0,925 ;
        (iii) 0 à 25 pour cent en poids d'au moins un copolymère d'éthylène et d'au moins un alcanoate de vinyle, un acrylate d'alkyle ou un méthacrylate d'alkyle ; et
        (iv) 0 à 53 pour cent en poids d'au moins un copolymère linéaire d'éthylène/oléfine alpha ayant une densité de 0,915 à 0,940 ;
    (b) à extruder le mélange à l'état fondu sous la forme d'une feuille ;
    (c) à refroidir le polymère fondu présent dans la feuille au-dessous de son point de fusion ;
    (d) à maintenir la feuille de polymère à une température plus basse que son point de fusion mais suffisamment élevée pour permettre à celui-ci d'être orienté par étirage ; et
    (e) ) orienter la feuille de polymère dans au moins une direction.

19. Une structure à couches multiples dont l'une au moins des couches est la pellicule rétractable de l'une quelconque des revendications précédentes.

14

**Revendications pour l'Etat contractant suivant : ES**

1.  Un procédé pour la préparation d'une pellicule rétractable comprenant les opérations consistant :
    (a) à mélanger à l'état fondu une composition de
    (i) 10 à 80 pour cent en poids d'au moins un copolymère linéaire d'éthylène/oléfine alpha ayant une densité de 0,890 à 0,915 ;
    (ii) 15 à environ 70 pour cent en poids d'un moins un polyéthylène basse densité provenant d'un réacteur tubulaire et ayant une densité de 0,920 à 0,925 ;
    (iii) 0 à 25 pour cent en poids d'au moins un copolymère d'éthylène et d'au moins un alcanoate de vinyle, un acrylate d'alkyle ou un méthacrylate d'alkyle ; et
    (iv) 0 à 53 pour cent en poids d'au moins un copolymère linéaire d'éthylène/oléfine alpha ayant une densité de 0,915 à 0,940 ;
    (b) à extruder le mélange à l'état fondu sous la forme d'une feuille ;
    (c) à refroidir le polymère fondu présent dans la feuille au-dessous de son point de fusion ;
    (d) à maintenir la feuille de polymère à une température plus basse que son point de fusion mais suffisamment élevée pour permettre à celui-ci d'être orienté par étirage ; et
    (e) ) orienter la feuille de polymère dans au moins une direction.

2.  Le procédé de la revendication 1 dans laquelle la pellicule est monocouche.

3.  Le procédé de la revendication 1 ou 2 dans laquelle l'oléfine alpha du copolymère (i) compte 6 à 18 atomes de carbone.

4.  Le procédé de la revendication 1 ou 2 dans laquelle l'oléfine alpha du copolymère (i) est le 1-octène.

5.  Le procédé des revendications 1, 2, 3 ou 4 dans laquelle l'oléfine alpha du copolymère (i) constitue d'environ 40 à environ 65 pour cent du poids de la composition.

6.  Le procédé de la revendication 5 dans laquelle le copolymère (i) constitue d'environ 45 à environ 60 pour cent du poids de la composition.

7.  Le procédé de l'une quelconque des revendications 1 à 6 dans laquelle le polymère (iv) est un copolymère d'éthylène avec une oléfine alpha comptant 4 à 18 atomes de carbone.

8.  Le procédé de la revendication 7 dans laquelle le polymère (iv) est un copolymère d'éthylène et de 1-octène.

9.  Le procédé de l'une quelconque des revendications 1 à 8 dans laquelle le polymère (ii) constitue d'environ 25 à environ 55 pour cent du poids de la composition.

10. Le procédé de la revendication 9 dans laquelle le polymère (ii) constitue d'environ 30 à environ 45 pour cent du poids de la composition.

11. Le procédé de l'une quelconque des revendications 1 à 10 dans laquelle le copolymère (iii) est un copolymère d'éthylène et d'acétate de vinyle.

12. Le procédé de la revendication 11 dans laquelle le copolymère d'éthylène et d'acétate de vinyle de (iii) renferme d'environ 3 à environ 20 pour cent en poids de portions d'acétate de vinyle copolymérisées.

13. Le procédé de la revendication 11 dans laquelle le copolymère d'éthylène et d'acétate de vinyle de (iii) renferme d'environ 10 à environ 15 pour cent en poids de portions d'acétate de vinyle copolymérisées.

14. Le procédé de l'une quelconque des revendications 1 à 13 dans laquelle le copolymère (iii) constitue d'environ 2 à environ 22 pour cent du poids de la composition.

15. Le procédé de la revendication 14 dans laquelle le copolymère (iii) constitue d'environ 5 à environ 15 pour cent du poids de la composition.

**16.** Le procédé de l'une quelconque des revendications 1 à 15 dans laquelle la pellicule est réticulée au degré obtenu par un dosage d'irradiation d'environ 1 à environ 5 mégarads de rayonnement ionisant.

**17.** Le procédé des revendications 1, 2 ou 16 dans laquelle le copolymère de (i) est un copolymère d'éthylène et de 1-octène, présente un indice de fluidité de 0,5 à 2,0 et une densité de 0,910 à 0,915 et est présent en une proportion de 45 à 60 pour cent en poids, le polymère de (ii) est présent en une proportion de 30 à 45 pour cent en poids, et le copolymère de (iii) est un copolymère d'éthylène avec 10 à 15 pour cent en poids d'acétate de vinyle et est présent en une proportion de 5 à 15 pour cent en poids.